# FASCICULE DE BREVET EUROPEEN

(11) **EP 2 069 754 B1**
(45) Date de publication et mention de la délivrance du brevet: **29.11.2017**
(21) Numéro de dépôt: 07825104.8
(22) Date de dépôt: 12.09.2007
(51) Int. Cl.: G01N 15/02, B07B 1/26, G01N 15/00, B07B 1/22

(54) **DISPOSITIF DE CARACTERISATION DE LA GRANULOMETRIE DE POUDRES ET SES UTILISATIONS**
VORRICHTUNG ZUR CHARAKTERISIERUNG DER PARTIKELGRÖSSENVERTEILUNG VON PULVERN UND IHRE VERWENDUNG
DEVICE FOR CHARACTERIZING THE PARTICLE SIZE DISTRIBUTION OF POWDERS AND ITS USES

(30) Priorité: 14.09.2006 FR 0608038
(43) Date de publication de la demande: 17.06.2009
(73) Titulaire: Omya S.A.S., 75015 Paris (FR)
(72) Inventeur: LARGEAUD, Gil, 92140 Clamant (FR)
(74) Mandataire: Richebourg, Michel François
(86) Numéro de dépôt international: PCT/IB2007/002644
(87) Numéro de publication internationale: WO 2008/032192

(56) Documents cités:
- WO-A-84/04473
- WO-A-2006/123037
- FR-A- 2 275 117
- US-A- 4 184 944
- US-A- 4 282 090

## Description

L'invention concerne le secteur des dispositifs et appareillages permettant la détermination de la granulométrie des poudres, cette caractérisation pouvant notamment être réalisée en ligne, c'est-à-dire au cours du procédé de fabrication desdites poudres. Les poudres concernées sont plus particulièrement des poudres sèches, c'est-à-dire des poudres présentant un taux d'humidité inférieur à 5 % en masse d'eau, tel que déterminé par des mesures de pesées différentielles avant et après séchage desdites poudres.
Les poudres concernées sont aussi les poudres ayant une étendue granulométrique large, c'est-à-dire dont le diamètre moyen est compris entre 0,05 et 10 mm.

Les poudres concernées sont encore plus particulièrement des poudres utilisées dans le secteur alimentaire, telles que des poudres à base de cristaux de sucre, des poudres de sel, des farines, des poudres de lait, des poudres constituées de matériaux alimentaires déshydratés, des poudres lessivières, des poudres de céramiques, des poudres plastiques, des poudres métalliques, des poudres de peintures, des poudres pharmaceutiques, des toner pour impression, des engrais, ou encore des poudres constituées de matières minérales, et encore plus particulièrement des poudres de matières minérales à base de carbonate de calcium naturel et / ou précipité et / ou de dolomies et / ou de talc, et de manière encore plus particulière des poudres de matières minérales à base d'un carbonate de calcium naturel qui est du marbre, de la craie, du calcaire ou leurs mélanges.
Un premier objet de l'invention est un dispositif de caractérisation de la granulométrie de poudres selon la revendication 1. Un autre objet de l'invention est l'utilisation d'un tel dispositif pour la caractérisation de la granulométrie de poudres, et notamment leur caractérisation en ligne c'est-à-dire au cours de leur processus de fabrication.

Il s'agit notamment de poudres sèches, c'est-à-dire de poudres dont le taux d'humidité est inférieur à 5 % en masse d'eau, tel que déterminé par des mesures de pesées différentielles, avant et après séchage de ladite poudre.
Il s'agit également de poudres ayant une étendue granulométrique large, c'est-à-dire dont le diamètre moyen est compris entre 0,05 et 10 mm.
Il s'agit enfin de poudres utilisées dans le secteur alimentaire, telles que des poudres à base de cristaux de sucre, des poudres de sel, des farines, des poudres de lait, des poudres constituées de matériaux alimentaires déshydratés, des poudres lessivières, des poudres de céramiques, des poudres plastiques, des poudres métalliques, des poudres de peintures, des poudres pharmaceutiques, des toner pour impression, des engrais, ou encore des poudres constituées de matières minérales, et encore plus particulièrement des poudres de matières minérales à base de carbonate de calcium naturel et / ou précipité et / ou de dolomies, et de manière encore plus particulière des poudres de matières minérales à base d'un carbonate de calcium naturel qui est du marbre, de la craie, du calcaire ou leurs mélanges.
Un premier but de l'invention est un dispositif permettant la caractérisation éventuellement en ligne de la granulométrie de diverses poudres, telles que notamment des poudres sèches telles que définies plus haut, ayant une granulométrie large telle qu'également définie ci-dessus, et notamment des différentes catégories de poudres telles que définies dans le paragraphe précédent.

Par caractérisation en ligne de la granulométrie, la Demanderesse entend le contrôle de la granulométrie au cours du procédé de fabrication desdites poudres, et notamment au cours du procédé de réduction granulométrique desdites poudres lorsqu'il s'agit de poudres composées de matières minérales.

Un autre but de l'invention est d'apporter un dispositif permettant de caractériser en une seule fois différentes classes granulométriques pour les poudres susmentionnées.
Un autre but de l'invention réside dans le fait que le dispositif ainsi réalisé est simple à mettre en oeuvre au niveau d'un site de fabrication desdites poudres, et compatible avec les contraintes industrielles d'un tel site.
Un autre but de l'invention est d'offrir un dispositif permettant de caractériser la granulométrie desdites poudres au cours de leur processus de fabrication et ce, sans altérer lesdites poudres ni altérer ledit dispositif: on maintient ainsi l'intégrité du matériau particulaire à analyser et on assure la pérennité du dispositif dans le temps.
Un autre but de l'invention est d'assurer le nettoyage dudit dispositif de manière automatique (sans manipulation de la part d'un opérateur) ce qui contribue à la fois à diminuer les coûts de maintenance et à maintenir l'intégrité du dispositif et de ses résultats.

Un dernier but de l'invention est d'apporter un dispositif permettant de caractériser la granulométrie desdites poudres où le système de pesée n'est pas altéré par les vibrations provenant de l'organe de vibration continu.
Il est à noter que ces trois derniers objectifs (préservation des poudres et dispositifs, nettoyage automatique, affranchissement des vibrations) sont nécessairement atteints pour la présente invention dans la mesure où les caractéristiques qui contribuent à atteindre ces objectifs sont obligatoires et non pas facultatives. Il s'agit de distinction fondamentale par rapport au brevet Français FR2886014. Dans le domaine des poudres, le contrôle de la granulométrie de celles-ci est un élément fondamental pour l'homme du métier, ingénieur généraliste en procédés industriels et spécialisé dans les techniques relatives aux matériaux pulvérulents. Ce contrôle lui permet en effet d'apprécier la qualité du produit fabriqué au cours des différentes étapes de réduction granulométrique dans le cadre de poudres de matières minérales. Dans le domaine plus général des poudres sèches, et notamment des poudres de matières minérales, des poudres plastiques, métalliques, céramiques ou lessivières, et des sucres, un tel contrôle permet aussi à l'homme du métier de s'assurer de l'efficacité de son procédé de fabrication, tout en garantissant au client final des spécifications précises en matières de finesse et de taille des particules.

Dans le domaine du sucre, il est en effet bien connu que la distribution de taille des cristaux individuels influence la dissolution dans l'eau du morceau de sucre formé desdits cristaux, tel que décrit dans "Dissolution of sugar" (Zuckerindustrie Berlin 1990, 115 (4), pp 250-60).

Il en est de même pour les pastilles de lessive dont la solubilité dans l'eau est entre autres gouvernée par la distribution de taille des particules individuelles qui les constituent, ce même facteur influençant aussi la coulabilité desdites poudres, tel que l'enseigne le document "Production of a granulated laundry detergent using pneumatic nozzles" (Inzynieria i Aparatura Chemiczna (1996), 35 (3), pp 15-18).

Dans le domaine des céramiques, il est aussi bien connu que la distribution granulométrique d'une poudre de carbonate de calcium peut avoir une influence sur les propriétés de coulabilité de ladite poudre, ou encore sur le séchage des matériaux céramiques contenant ladite poudre, tel qu'indiqué dans "Influence of mean particle size on drying-shrinkage behaviour of calcium carbonate slip cast bodies" (Proceedings of the China International Conference on High-Performance Ceramics, 1st, Beijing, China, Oct. 31-Nov. 3, 1998 (1999), Meeting Date 1998, pp 181-184).

Dans le secteur des poudres utilisées dans les industries plastiques, il est également bien connu que cette répartition granulométrique joue un rôle très important sur la coulabilité desdites poudres. Il en va de même dans pour les poudres métalliques.

Enfin, dans l'industrie minéralière, il est bien connu que cette même distribution granulométrique des poudres est un facteur primordial pouvant influencer de nombreuses propriétés du produit final contenant lesdites poudres, notamment à base de carbonate de calcium. De nombreux travaux relient en effet cette distribution de tailles de particules à la dissolution du carbonate de calcium ("Dissolution kinetics of CaCO3 in powder form and influence of particle size and pretreatment on the course of dissolution", Industrial & Engineering Chemistry Research (1996), 35 (2), pp 465-74), aux propriétés mécaniques de compositions plastiques contenant du carbonate de calcium ("Effect of CaCO3 particle size grading on rheological property of polypropylene", Feijinshukuang (2001), 24 (2), pp 13-14), aux propriétés optiques de feuilles de papier fabriquées avec des sauces de couchage contenant du carbonate de calcium ("Effect which the particle size of ground calcium carbonate exerts on color rheology and coated paper property", Kami Pa Gikyoshi (1999), 53 (9), pp 1174-1178), ou encore à la structure de films de peinture contenant du carbonate de calcium ("The influence of particle size distribution of natural calcium carbonate on the structure of a paint film using mercury porosimetry", Double Liaison - Chimie des Peintures (1986), 33(372), pp 25-37, VIII-XVIII).

En vue de réaliser le contrôle de la granulométrie desdites poudres, notamment dans l'industrie minéralière, l'homme du métier doit donc disposer d'un dispositif :
- **facile à installer** dans son procédé de fabrication et simple d'emploi,
- **utilisable en ligne** dans le procédé de réduction granulométrique desdites matières minérales (afin de contrôler la finesse de celles-ci en un point donné de ce procédé - typiquement en sortie d'un appareil de broyage et / ou de sélection),
- **compatible avec les contraintes industrielles** d'un site de production (telles que les vibrations liées à l'utilisation de broyeurs, les chocs inhérents au déplacement de divers matériels, une atmosphère souvent chargée en particules pulvérulentes,...).

En vue de caractériser la granulométrie de diverses poudres, il est bien connu, tout au moins à l'échelle du laboratoire, d'utiliser des techniques telles que la Microscopie Electronique par Transmission, par Diffusion, des méthodes basées sur l'adsorption gazeuse, des moyens optiques reposant sur la diffraction des rayons X, la Microscopie Optique traditionnelle, ou encore des technologies laser. Ainsi, le document "Comparison of various particle sizing techniques" (Journal of Wuhan University of Technology, Materials Science Edition, 2000, 15 (2), pp 7-14) fait-il état de l'utilisation de ces techniques en vue de mesurer les dimensions caractéristiques de poudres d'oxyde d'aluminium dans le domaine de la céramique.

A titre d'exemples d'appareillages commerciaux utilisables pour déterminer la répartition granulométrique de poudres, et utilisant certaines des techniques précédemment mentionnées, la Demanderesse peut citer la gamme des granulomètres laser de laboratoire Mastersizer™ fabriqués par la société Malvern™, la gamme des granulomètres laser en ligne Insitec™ fabriqués par la même société, et les appareils du type Sedigraph™ fabriqués par la société Micromeritics dont la technologie repose sur la diffraction des rayons X.

Ainsi, dans les domaines concernés par la présente invention, le document "Alcoholic crystallisation of sucrose" (Thèse, University of Queensland, Department of chemical engineering, 1E0406/7, 2000) rapporte-t-il l'utilisation d'un granulomètre Mastersizer™ en vue de déterminer la taille de cristaux de sucre. Ce même appareillage a été utilisé avec succès pour la détermination de la granulométrie de matériaux plastiques, tel que décrit dans "Physical properties and compact analysis of commonly used direct compression binders" (AAPS PharmSciTech. 2003, 4(4), article 62). De même, "Colloidal processing of hydroxyapatite" (Biomaterials, 22, 2001, pp 1847-1852) relate la mise en oeuvre d'un appareil du type Sedigraph™ 5100, pour déterminer la répartition granulométrique de poudres d'hydroxyapatite utilisées dans la fabrication de matériaux céramiques.

Il est également connu d'utiliser dans le domaine général des poudres, des dispositifs de mesure granulométrique basés sur une analyse d'images réalisées au moyen de caméras. L'homme du métier connaît dans ce domaine des appareillages du nom de Camsizer™ commercialisé par la société Retsch Technology™, de CPA™ commercialisé par la société Haver and Boecker™, ou encore Part An™ commercialisé par la société Norske Hydro™.

Toutefois, de tels dispositifs présentent un certain nombre d'inconvénients. Leur étendue de mesure granulométrique est, selon les dispositifs, étroite. Ces appareils sont spécialisés sur une plage de mesure. Ils ne peuvent pas à la fois mesurer sur une étendue de quelques dizaines de microns à plusieurs millimètres. Par utilisation de techniques telles que des lasers, des caméras, etc, les résultats sont déduits de calculs statistiques : ils demandent une mise au point par des corrélations longues à élaborer. La méthode statistique ne permet pas de donner la coupe du produit, essentielle pour la qualité du produit livré. De plus, ces appareillages de précision s'accommodent mal des vibrations inhérentes à la présence de certains équipements, tels que des broyeurs qu'on rencontre fréquemment dans l'industrie minéralière. Ces vibrations perturbent également les dispositifs dont l'étendue de mesure granulométrique est plus large, comme les systèmes optiques par analyse d'image, qui, du fait de leur profondeur de champ trop faible, ne permettent pas d'obtenir une qualité d'image nécessaire et suffisante à la caractérisation des poudres suscitées sauf en utilisant des technologies micrométriques de mise au point de l'image, inutilisables dans un environnement industriel contraignant (vibrations...). De plus, nombre de dispositifs sont relativement onéreux ; ils s'appuient sur des techniques nécessitant une mise au point souvent longue et minutieuse des échantillons à analyser, dans des conditions rigoureuses de propreté qu'il est parfois difficile d'obtenir dans le cas d'une unité de fabrication de matières minérales (existence de matières pulvérulentes dans l'atmosphère). Par ailleurs, certaines technologies ne permettent de caractériser que de très faibles quantités de poudre (quelques grammes), ce qui pose le problème de la représentativité des échantillons par rapport aux capacités réelles de production de la plupart des outils industriels. Enfin, ces dispositifs de mesure -en tant que tels- devraient subir de nombreuses modifications afin d'être utilisés en un point précis du procédé de fabrication, pour réaliser la mesure en ligne de la granulométrie des poudres fabriquées, ce qui constitue l'exigence majeure pour l'homme du métier.

Aussi, l'homme du métier préfère opter pour des appareillages de caractérisation basés sur une sélection des particules en fonction de leur taille, à partir de dispositifs mécaniques, reposant soit sur des cribles, des tamis des treillis, ou bien sur des ressorts. La Demanderesse va maintenant passer en revue les documents accessibles à l'homme du métier dans chacune de ces deux catégories.

La catégorie des dispositifs reposant sur des cribles, des tamis et des treillis est extrêmement vaste. A ce titre, la Demanderesse indique que la classe B07B, de la classification internationale des brevets (8^{ème} édition) et qui concerne le criblage, le tamisage, le triage de matériaux solides au moyen de treillis, de grilles ou de systèmes analogue, comporte au jour du dépôt de la présente Demande plus de 17 789 documents.

Parmi eux, on peut toutefois distinguer les dispositifs reposant sur des tamis tournants et / ou vibrants, de différentes géométries. Ainsi, le document US 4 184 944 décrit-il un dispositif de tamis cylindrique, tournant autour de son axe horizontal de façon continue, et permettant de réaliser le tamisage de poudres sèches ou humides à travers le tamis qui enrobe ledit cylindre. Parallèlement, le document EP 1 163 958 présente un appareillage cylindrique tournant sur son axe horizontal de façon continue, ledit mouvement horizontal étant complété par un mouvement de vibration induit sur le tamis qui forme le cylindre : cet appareil est tout particulièrement destiné au tamisage de matériaux à base de glaise.

De manière générale, la Demanderesse indique que l'utilisation de cages cylindriques recouvertes d'un tamis, animées d'un mouvement de rotation et / ou de vibration, permettant ainsi le tamisage de particules minérales, sont des moyens bien connus de l'homme du métier. D'autre part, en complément des dispositifs précités, il est courant de réaliser des pesées des matériaux ainsi tamisés, ce qui permet d'obtenir une proportion massique des particules dont le diamètre est inférieur à la maille du tamis utilisé. Toutefois, ces dispositifs ne donnent pas satisfaction à l'homme du métier puisqu'ils sont utilisés de façon industrielle pour séparer des matériaux de natures différentes et / ou laver des matériaux pollués par des particules de granulométrie très différentes. Ils ne sont donc pas destinés à la caractérisation des poudres. Ces dispositifs sont, de plus, équipés d'un seul type de tamis recouvrant l'ensemble de leur circonférence, permettant éventuellement de ne caractériser qu'une seule classe granulométrique de particules. Par ailleurs, aucun de ces dispositifs ne révèle de systèmes permettant de mesurer en ligne la granulométrie de poudres.

Dans la catégorie des appareillages à base de cribles, tamis ou autre grilles, la Demanderesse connaît enfin le document US 4 487 323 qui décrit un dispositif pour caractériser la granulométrie de poudres, reposant sur un tambour rotatif autour de son axe horizontal qui dispose d'une ouverture et de différents tamis. Le tambour prend différentes positions autour de son axe et est agité par un moteur vibrant, ce qui permet le tamisage de la poudre qu'il contient à travers le tamis qui est orienté vers le bas. Une balance située en dessous du tambour, et désolidarisée de l'ensemble, permet de quantifier la masse de particules ayant traversé chaque tamis. Toutefois, un tel dispositif ne permet pas la caractérisation en ligne de la granulométrie de poudre puisque l'opérateur doit apporter manuellement la poudre à tester au sein du tambour.

Aussi, l'homme du métier se tourne vers la catégorie des dispositifs de mesure de la granulométrie de poudres, notamment par la mise en oeuvre de ressorts.
Cette technologie apparaît en fait beaucoup plus récente que celle précédemment évoquée (et qui repose sur des grilles, des tamis ou des cribles). De ce fait, le nombre de documents qu'elle contient est beaucoup moins important, et il est plus aisé pour l'homme du métier d'identifier rapidement des dispositifs qui lui permettent éventuellement de résoudre son problème de caractériser en ligne la granulométrie de différentes poudres, au cours de leur procédé de fabrication.

Ainsi, l'homme du métier identifie-t-il rapidement le document récent US 6 829 955 B1 (brevet américain publié le 14 décembre 2004). Ce document décrit un dispositif permettant la détermination de la granulométrie, en ligne, et de manière relativement simple, de diverses poudres. Un tel dispositif est équipé d'un ressort dont l'écartement des spires, variable en fonction de l'amplitude d'oscillation dudit ressort, va permettre de laisser passer différentes classes granulométriques de particules. Un tel dispositif n'est pas cependant sans poser de nouveaux problèmes à l'homme du métier, même s'il permet déjà de caractériser la granulométrie en ligne de diverses poudres. En effet, tel qu'indiqué sur la figure de la page de garde dudit document, les particules de poudre à analyser, lorsqu'elles tombent dans la chambre de réception située au dessus du ressort sont à l'origine d'un double inconvénient : leur énergie peut être suffisamment importante pour qu'elles s'altèrent au moment du choc avec le ressort (l'intégrité du matériau à tester n'est plus assurée) et / ou qu'elles altèrent le ressort en endommagent les spires ou en modifiant leur écartement (l'intégrité du dispositif et donc de la mesure n'est plus assurée).

Aussi, en vue de résoudre son **problème technique initial**, consistant en la mise au point d'un dispositif de **caractérisation de la granulométrie en ligne de poudres, simple à installer dans l'industrie, compatible avec les contraintes industrielles telles que les vibrations**, la Demanderesse a mis au point un dispositif qui, tout en remplissant ces conditions, palie aux inconvénients relatif au document US 6 829 955 qui constitue l'art antérieur le plus proche puisqu'il résout déjà le problème technique initial, ces inconvénients étant **l'altération du matériau à analyser et la dégradation du dispositif de mesure**.

La mise au point du dispositif selon l'invention apparaît d'autant plus inventive qu'elle ne s'appuie aucunement sur le document constituant l'état de la technique le plus proche, que l'homme du métier aurait dû chercher à améliorer de manière évidente et naturelle.

Au contraire, et de manière tout à fait inventive, la Demanderesse a su identifier un document beaucoup plus ancien, US 4 487 323, parmi un ensemble de documents très vaste puisqu'il s'agit de celui constitué des appareillages reposant sur des cribles, des tamis ou des grilles (17 789 documents au jour du 08 mai 2006 dans la classe B07B de la classification internationale des brevets), dont il a largement transformé le fonctionnement, pour résoudre son problème technique.

Le choix de ce document était d'autant moins naturel / évident pour l'homme du métier puisque ledit document US 4 487 323 ne résout pas, comme déjà indiqué précédemment, le problème technique initial posé dans la présente Demande. La Demanderesse tient en effet à souligner que la caractérisation de la granulométrie de poudres, en ligne, ne peut être réalisée à partir du dispositif décrit dans le document US 4 487 323. En effet, plusieurs interventions humaines sont nécessaires dans ledit document, en vue de caractériser la granulométrie d'une poudre : introduction de celle-ci dans le tambour de tamisage, avec notamment le risque que les tamis soient endommagés (et donc changement manuel des tamis) ou bouchés (et donc nettoyage manuel des tamis) lors de cette introduction, et / ou que la poudre soit altérée lorsqu'elle entre en contact avec les tamis (et alors déchargement de la poudre, nettoyage manuel des tamis, et nouvelle introduction de la poudre pour recommencer la mesure), et nettoyage / entretien général du dispositif et notamment des tamis. A l'inverse, le dispositif objet de la présente invention ne nécessite aucune intervention manuelle au cours du cycle de tamisage (et ce, sans non plus endommager / boucher les tamis, ni altérer la poudre), ni pour le nettoyage des tamis. De plus, il est équipé d'un organe d'alimentation qui lui permet de collecter directement la poudre à analyser dans son procédé de fabrication (prélèvement sur une trémie, ou dans un silo par exemple) : de la sorte, ledit dispositif peut être parfaitement synchronisé avec le procédé même de fabrication de ladite poudre.

Après avoir su identifier ce document, la Demanderesse a su également modifier le dispositif qui en faisait l'objet pour :
- **résoudre son problème technique initial** (c'est-à-dire rendre possible la détermination granulométrique de poudres, **en ligne**, de manière **simple**, et **compatible avec les contraintes industrielles** telles que les vibrations) ;
- tout en résolvant ce problème technique initial, éviter les inconvénients liés à **l**'**altération du matériau à tester et la dégradation du dispositif**, inconvénients qui sont révélés dans le document US 6 829 955 ;

Aussi, en vue de résoudre son problème technique initial, c'est-à-dire de rendre possible la détermination de la granulométrie en ligne des poudres de manière simple et compatible avec les contraintes industrielles, la Demanderesse a-t-elle introduit un **organe d'alimentation** permettant d'introduire les poudres à tester directement dans l'organe de tamisage horizontal, organe qui ne figurait pas dans le document US 4 487 323. Or, un tel choix allait induire immanquablement l'arrivée brutale de la poudre à analyser sur les tamis, risquant d'altérer ladite poudre et / ou d'endommager les tamis : on retrouvait ainsi les problèmes posés dans le document US 6 829 955, ce qui démontre bien que ce choix n'était pas naturel. Un des mérites de la Demanderesse repose alors sur la manière dont elle a résolu ce dernier inconvénient : elle a équipé l'organe de tamisage horizontal **d'une plaque anti-choc** qui ne figurait pas dans le document US 4 487 323, ladite plaque possédant un caractère anti-choc étant positionnée vers le bas à l'origine du cycle de mesure, pour recevoir la poudre à tester. De la sorte, les tamis ne sont plus endommagés et la poudre à tester n'est plus altérée, ce qui garantit l'intégrité des uns et de l'autre. La plaque antichoc est en fait un cadre en inox équipé d'un coussin réalisé au moyen d'un caoutchouc naturel (bonne résistance à l'abrasion) et d'un gel de silicone. Le gel a pour particularité d'éviter tout rebond du produit en absorbant l'énergie du choc sans la restituer.
Ainsi, l'homme du métier possède-t-il à travers la présente invention un dispositif permettant la caractérisation en ligne de poudres, simple à mettre en oeuvre, compatible avec les vibrations présentes dans une unité de production industrielle, qui ne dégrade pas la poudre à analyser et qui n'est pas altéré au contact de ladite poudre : ceci constituait l'exigence majeure pour l'homme du métier.

Enfin, il existe deux autres avantages secondaires procurés par la présente invention, et que n'offraient pas le document US 4 487 323. La Demanderesse souligne que ces 2 autres avantages ne sont pas liés à un nouveau problème technique, puisqu'ils peuvent être reliés au problème technique initial, tel que présenté auparavant. La Demanderesse a choisi simplement de les présenter comme des problèmes techniques secondaires, au sens où leurs solutions ne constituent que des caractéristiques optionnelles de la présente invention.

La première est que le dispositif décrit dans le document US 4 487 323 n'est pas facile à mettre en oeuvre au sens où l'organe de mesure est désolidarisé du reste de l'appareillage : si on veut déplacer le dispositif, il faut donc déplacer l'organe de mesure, ce qui nécessite une double manutention. Or, fixer l'organe de mesure au reste du dispositif va le rendre dépendant des vibrations induites par l'organe de vibration continu, et donc incapable de fournir une mesure fiable. Un autre mérite de la Demanderesse repose ici sur la solution qu'elle a mise en oeuvre et qui consiste à fixer effectivement l'organe de mesure au reste du dispositif, mais qui consiste aussi à prévoir un **organe d'accouplement élastique** entre le moteur et l'axe horizontal de l'organe de tamisage. De la sorte, cette combinaison permet de fournir un dispositif d'un seul tenant (ne nécessite pas des manutentions multiples pour un déplacement dans l'usine) et dont la durée de vie de l'organe de vibration est augmentée. En effet, la Demanderesse a su remarquer que, le système de vibration permettant de faire vibrer la cage tournante en mettant en vibration l'axe qui y est accouplé, le fait de briser la liaison axe / moteur au moyen d'un organe d'accouplement élastique permettait d'éviter la transmission des vibrations sur le moteur : on augmente donc ainsi la durée de vie de celui-ci. Cet organe d'accouplement élastique, bien connu de l'homme du métier, peut être notamment un organe de nature élastomérique.
La seconde est liée à l'exigence de simplicité de mise en oeuvre, et concerne le nettoyage du dispositif. Le mérite de la Demanderesse repose ici sur le fait qu'elle a su remarquer qu'un organe de nettoyage automatique, consistant en au moins une buse et / ou un générateur d'ultrasons situé à la périphérie de l'organe de tamisage et projetant de l'air comprimé sur les tamis allait permettre, en combinaison avec une ou plusieurs rotations desdits tamis, de nettoyer complètement et de manière parfaite la totalité du dispositif et ce, dans un laps de temps très réduit.
Enfin, la Demanderesse tient à indiquer qu'elle connaît au niveau de l'art antérieur le Brevet Français FR2886014, et qui ne rentre donc dans l'état de la technique qu'au titre de la nouveauté (selon l'article L611-14 du Code de la Propriété Intellectuelle, ou encore selon l'article 54 (2) de la Convention sur le Brevet Européen). Or, il existe -entre autre-une différence fondamentale entre ladite Demande et la présente invention, qui réside dans les 4 positions de l'organe rotatif, dont l'une d'elles est une plaque anti-choc, dans le cas de la présente invention.
Aussi, un premier objet de l'invention est un dispositif de caractérisation de la granulométrie de poudres comportant un organe d'alimentation, un organe d'évacuation, un organe de pesée, un organe de vibration continue, un organe de tamisage, ainsi qu'éventuellement un organe de pilotage, et caractérisé :
- en ce que l'organe de tamisage est un organe rotatif autour d'un axe horizontal, et dispose d'au moins 1 position pour un espace vide ou espace de libération et d'introduction de la poudre, **1 position pour une plaque anti-choc**, au moins 2 positions correspondant à 2 tamis de maillage différents ;
- et en ce que ledit dispositif possède un o**rgane de nettoyage** consistant en au moins une buse et / ou un générateur d'ultrasons située à la périphérie de l'organe de tamisage ;
- et en ce que ledit dispositif possède un **organe d'accouplement élastique** entre l'axe horizontal de l'organe de tamisage et l'organe de vibration continu.

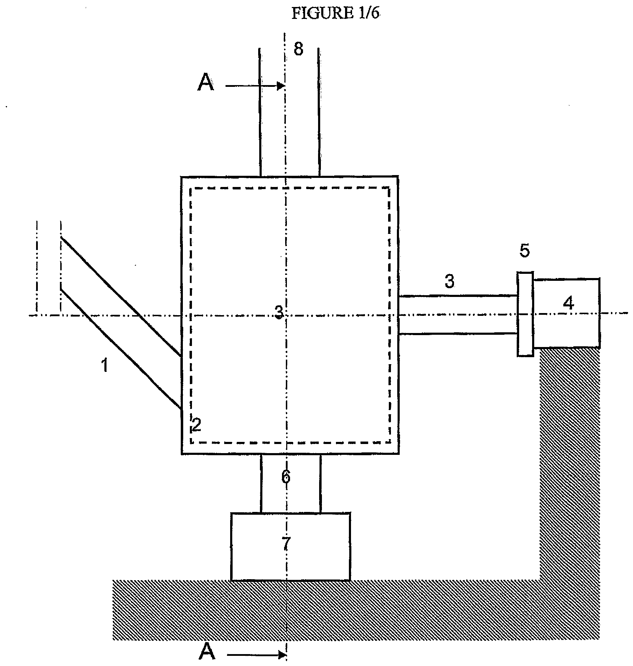

La figure 1 représente une vue de face très schématique du dispositif objet de la présente invention, la partie hachurée représentant le bâti sur lequel est fixé le dispositif objet de la présente invention, de manière à fournir une cohésion entre les différents organes dudit dispositif.

Ledit dispositif est donc équipé d'un organe d'alimentation (1) par lequel la poudre à analyser pénètre dans l'organe de tamisage (2). L'homme du métier saura adapter l'organe d'alimentation de manière à le relier à un silo, une trémie, ou tout autre point du procédé de fabrication de la poudre à tester, de manière à effectuer en ce point un prélèvement de ladite poudre, en vue de l'amener dans le dispositif objet de l'invention. C'est ainsi qu'on peut réaliser la détermination de la granulométrie en ligne des poudres à tester, ce qui est un des avantages de la présente invention.

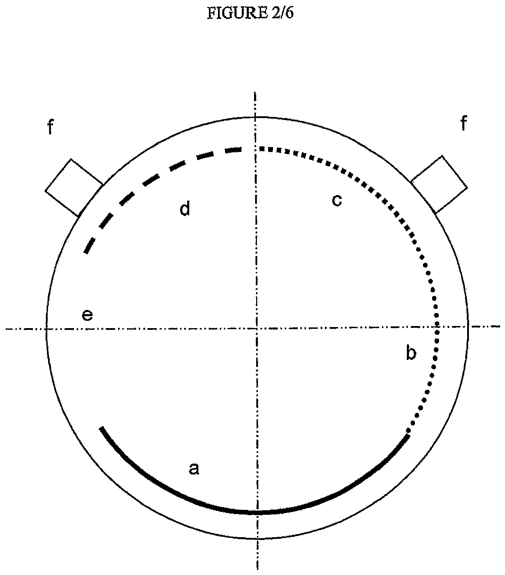

L'organe de tamisage est un organe rotatif autour de son axe horizontal (3) et on n'a pas représenté sur cette figure l'espace libre, ni les différents tamis, ni la plaque anti-choc qui font partie des caractéristiques dudit organe de tamisage (on se reportera à la figure 2, détaillée plus avant). L'organe de vibration continu (4) imprime ses vibrations à l'axe (3) qui les transmet à l'organe de tamisage. L'organe d'accouplement élastique (5) limite la propagation des vibrations de l'organe de tamisage vers l'organe de vibration continu : on augmente ainsi la durée de vie dudit organe de vibration continu.
De cette manière, on possède un dispositif d'un seul tenant, c'est-à-dire simple à mettre en oeuvre et notamment à déplacer dans une usine, et dont la durée de vie de l'organe de vibration continue est allongée : ceci constitue un des autres avantages de la présente invention.

Les différentes classes granulométriques de particules à analyser s'écoulent par les tamis de l'organe de tamisage, à travers l'organe d'évacuation (6) et leurs poids est finalement quantifié au niveau de l'organe de pesée (7).

La figure 2 illustre schématiquement l'organe de tamisage cylindrique, tel qu'on peut notamment l'observer selon une coupe AA de la figure 1.

Au cours du cycle de caractérisation de la poudre, l'organe de tamisage est disposé de telle manière à ce que la plaque anti-choc (a) soit positionnée vers le bas. De la sorte, la poudre à tester arrive directement sur cette plaque (a) par l'ouverture (e) : les matériaux ne sont pas altérés (ils ne se brisent pas notamment au contact des tamis rigides, comme dans le cas de l'art antérieur) et ils ne détériorent pas non plus lesdits tamis (comme dans le cas de l'art antérieur) : on préserve ainsi l'intégrité de la poudre à analyser tout comme l'intégrité du dispositif de mesure et notamment des tamis. Il s'agit-là du principal avantage offert par la présente invention.

En effet, ledit dispositif préserve l'intégrité des poudres à analyser, et ne peut pas être endommagé par lesdites poudres. Au sujet du maintien de l'intégrité du matériau à analyser, la Demanderesse tient à souligner qu'il s'agit d'une exigence essentielle et ce, afin de ne pas fausser la mesure de pesée. Mais (et c'est là encore un avantage annexe de la présente invention) le fait que la poudre parvienne sur la plaque anti-choc sans être détériorée, permet éventuellement de réaliser sur ladite poudre présente sur la plaque une autre mesure non destructive telle que, par exemple et sans vouloir être limitatif, une mesure optique, telle qu'une mesure de couleur tout particulièrement importante dans le cas d'une matière minérale tel que le carbonate de calcium. De plus, le présent dispositif ne comporte pas les inconvénients des méthodes de laboratoire évoquées auparavant, puisqu'il est peu coûteux à fabriquer, simple à intégrer et à utiliser et que les conditions de sa mise en oeuvre sont parfaitement compatibles avec l'environnement industriel dans lequel il est utilisé (atmosphère riche en matières pulvérulentes, chocs, vibrations,...). Ensuite, contrairement aux autres dispositifs mécaniques de l'art antérieur, il permet en une seule fois (sans changement de tamis ou interruption du cycle de mesure) de caractériser plusieurs classes granulométriques de particules. Enfin, sa simplicité le rend parfaitement adaptable en un point quelconque du procédé de fabrication de matières minérales, permettant ainsi un contrôle en ligne de la granulométrie desdites particules, ce qui est l'objectif essentiel pour l'homme du métier.

Le cycle de caractérisation peut alors commencer. Une fois toute la poudre à analyser introduite automatiquement sur la plaque antichoc, on fait tourner l'organe de tamisage jusqu'à ce que le tamis de maillage le plus fin (b), situé juste exactement à côté de la plaque anti-choc, se retrouve en position vers le bas : on tamise ainsi une première classe granulométrique de particules de poudre. L'opération est répétée pour le tamis (c) situé juste exactement à côté du tamis (b) et de maillage plus large que ce dernier, puis pour le tamis (d) situé juste exactement à côté du tamis (c) et de maillage plus large que ce dernier. Enfin, après une dernière rotation, l'organe de rotation se place de telle manière à ce que l'espace vide soit positionné vers le bas : les particules restées dans le cylindre s'évacuent donc vers le bas, et sont pesées sur la balance.

Cette figure représente donc le dispositif selon l'invention muni de 3 tamis de maillage différent (b, c et d) ; ce nombre n'est pas limitatif, et on rappelle que le dispositif objet de la présente invention doit comporter au moins 2 tamis de maillage différents. L'appareil est conçu pour gérer plusieurs positions donc plusieurs tamis adaptés au contrôle du processus de fabrication de la poudre à analyser.

De cette manière, grâce aux positions successives prises par l'organe de tamisage autour de son axe horizontal, les particules sont amenées sur des tamis au maillage de plus en plus large : on réalise ainsi une classification des particules en fonction de leur taille. Le système de pesée associé au dispositif permet de mesurer les masses de particules dont le diamètre est inférieur au maillage de chacun des tamis : on obtient ainsi, en reportant chaque masse de particules en fonction du poids total de l'échantillon, une répartition granulométrique des particules. Les résultats obtenus peuvent être exprimés en "passant" (pourcentage des particules traversant les tamis), en "refus" (pourcentage des particules restant dans les tamis, c'est à dire l'inverse du "passant") ou selon tout autre moyen d'expression de ce type de résultats.

En fin de cycle de caractérisation de l'échantillon prélevé, ce dernier est renvoyé dans le cycle de fabrication au cours d'une opération de nettoyage automatique de l'invention (opération dite de "backflush"). Cette étape de nettoyage a pour but d'évacuer la poudre présente dans l'organe de pesée, de nettoyer les tamis de l'organe de tamisage, de dépoussiérer le dispositif dans son ensemble et de réinitialiser l'appareillage (position d'origine pour les mises en route et / ou initialisations suite à une éventuelle défaillance de l'invention, ou position d'attente de départ d'un nouveau cycle durant l'utilisation de l'invention).

Elle consiste en :
- l'ouverture de l'organe de pesée pour évacuer l'échantillon,
- la rotation sur un ou plusieurs tours de l'organe de tamisage,
- la projection d'air comprimé sur les tamis de rotation, notamment par des buses situées de part et d'autre de l'organe de tamisage, telles que représentées sur la figure 2, (f), ou la projection d'ultrasons par des générateurs situés de part et d'autre de l'organe de tamisage.
- l'aspiration des poussières soulevées par l'air comprimé,
- la mise en position initiale du dispositif.

Les poussières soulevées par l'air comprimé peuvent alors être aspirées par un système de dépression (8 sur la figure 1), que l'on trouve sur tous les sites de fabrication industriels de poudres.
Dans le cas contraire le système pourra être facilement équipé d'un système de dépression autonome.
Le nombre de tamis, le temps de passage des particules sur chacun d'eux, la masse totale des particules introduites initialement dans l'organe de tamisage sont autant de paramètres que l'homme du métier saura adapter à la nature des poudres qu'il souhaite caractériser.

En plus de la répartition des particules en fonction de leur granulométrie, l'invention permet, au cours d'un cycle simplifié utilisant uniquement le tamis de maillage le plus grand et la position de libération des particules les plus grossières, d'identifier une pollution éventuelle de la poudre analysée par des particules de diamètres trop importants et ne devant pas être présentes dans la susdite poudre. Ces particules de diamètre trop important sont généralement présentes en faibles quantités, d'où le besoin d'utiliser un cycle simplifié, autorisant le prélèvement d'un échantillon de masse importante en comparaison à la masse de l'échantillon analysé lors du cycle complet.

Aussi, un premier objet de l'invention est un dispositif de caractérisation de la granulométrie de poudres comportant un organe d'alimentation, un organe d'évacuation, un organe de pesée, un organe de vibration continue, un organe de tamisage, ainsi qu'éventuellement un organe de pilotage, et caractérisé :
- en ce que l'organe de tamisage est un organe rotatif autour d'un axe horizontal, et dispose d'au moins 1 position pour un espace vide ou espace de libération et d'introduction de la poudre, **1 position pour une plaque anti-choc**, au moins 2 positions correspondant à 2 tamis de maillage différents ;
- et en ce que ledit dispositif possède **un organe de nettoyage** consistant en au moins une buse et / ou un générateur d'ultrasons située à la périphérie de l'organe de tamisage ;
- et en ce que ledit dispositif possède un **organe d'accouplement élastique** entre l'axe horizontal de l'organe de tamisage et l'organe de vibration continu.

Les organes d'alimentation, d'évacuation, de pesée et de vibration continue peuvent être réalisés selon toutes les formes et tous les moyens bien connus de l'homme du métier.

Il en va de même pour l'organe de tamisage, pour peu qu'il soit rotatif autour d'un axe horizontal, et comporte au moins 4 positions correspondant à 2 tamis de maillage différent, 1 espace vide d'introduction de la poudre et de libération des particules les plus grossières, et 1 plaque anti-choc.

Le dispositif est aussi caractérisé en ce que la plaque antichoc est en inox et est équipée d'un coussin réalisé au moyen d'un caoutchouc naturel et d'un gel de silicone.

Le dispositif est également caractérisé en ce que l'organe d'accouplement élastique est de nature élastomérique.

Le dispositif selon l'invention est aussi caractérisé en ce que l'organe de tamisage est réalisé selon différentes formes, et est notamment cylindrique ou polygonal.

Le dispositif objet de l'invention peut donc éventuellement contenir un organe de pilotage, dont la fonction est de contrôler les autres organes. Ledit organe de pilotage peut être embarqué ou déporté. Il peut s'agir d'un ordinateur, d'un automate programmable, ou de tout autre organe de pilotage bien connu de l'homme du métier.

Ensuite, un autre objet de l'invention est l'utilisation du dispositif précédemment décrit pour la détermination de la granulométrie de poudres.
L'utilisation du dispositif selon l'invention est aussi caractérisée en ce qu'elle permet la détermination de la granulométrie de poudres au moyen des différentes positions successives prises par l'organe de tamisage autour de son axe horizontal, la position initiale de l'organe de tamisage consistant en la plaque anti-choc positionnée vers le bas.

Cette utilisation est aussi caractérisée en ce que la détermination de la granulométrie des poudres ait lieu en ligne, c'est-à-dire au cours de leur processus de fabrication.

Cette utilisation est caractérisée en ce que lesdites poudres sont des poudres sèches, c'est-à-dire des poudres dont le taux d'humidité est inférieur à 5 % en masse d'eau, et préférentiellement inférieur à 2 % en masse d'eau, et très préférentiellement inférieur à 1 % en masse d'eau, tel que déterminé par des pesées différentielles, avant et après séchage de ladite poudre.

Cette utilisation est aussi caractérisée en ce que lesdites poudres possèdent une étendue granulométrique, telle que le diamètre moyen desdites poudres soit compris entre 0,05 et 10 mm, préférentiellement entre 0,1 et 5 mm, très préférentiellement entre 0,2 et 2 mm.

Cette utilisation est aussi caractérisée en ce que lesdites poudres sont des poudres utilisées dans le secteur alimentaire, telles que des poudres à base de cristaux de sucre, des poudres de sel, des farines, des poudres de lait, des poudres constituées de matériaux alimentaires déshydratés, des poudres lessivières, des poudres de céramiques, des poudres plastiques, des poudres métalliques, des poudres de peintures, des poudres pharmaceutiques, des toner pour impression, des engrais, ou encore des poudres constituées de matières minérales, et encore plus particulièrement des poudres de matières minérales à base de carbonate de calcium naturel et / ou précipité et / ou de dolomies et / ou de talc, et de manière encore plus particulière des poudres de matières minérales à base d'un carbonate de calcium naturel qui est du marbre, de la craie, du calcaire ou leurs mélanges.

Les exemples suivants illustrent l'invention sans pour autant en limiter la portée.

### EXEMPLES

### Exemple 1

Cet exemple illustre la mise en oeuvre de l'invention pour la caractérisation granulométrique d'une poudre qui est du carbonate de calcium fabriqué par la société OMYA™ dans son usine de Salses (France) et commercialisé par la suite sous le nom de Durcal™ 130.

Pour ce faire, on a équipé le dispositif selon l'invention de 4 tamis dont les mailles sont égales à 100 µm, 250 µm, 355 µm et 500 µm, répondant aux besoins d'analyses de la susdites poudre (spécifications qualitatives client...). Les temps de passage de la poudre sur chacun des tamis sont respectivement égaux à 06:00 minutes, 07:30 minutes, 04:00 minutes, 00:30 minutes et enfin de 00:25 minutes sur la position de libération des particules les plus grossières.

Les résultats correspondants, exprimés en pourcentage de particules dont le diamètre est supérieur à la maille de chaque tamis (dénommé refus) sont indiqués dans le tableau 1.

**Tableau 1 : refus à 100 µm, 250 µm, 355 µm et 500 µm, déterminés à partir du dispositif selon l'invention, sur une poudre sèche de carbonate de calcium (Durcal™ 130 commercialisé par la société OMYA™)**

| **Refus à 100 µm (%)** | **Refus à 250 µm (%)** | **Refus à 355 µm (%)** | **Refus à 500 µm (%)** |
|---|---|---|---|
| 82,09 | 30,55 | 0,55 | 0 |
| 78,76 | 29,39 | 0,39 | 0 |
| 79,35 | 28,47 | 0,29 | 0 |
| 81,15 | 29,54 | 0,39 | 0 |
| 81,06 | 30,21 | 0,19 | 0 |
| 78,37 | 27,16 | 0,3 | 0 |
| 79,82 | 27,63 | 0,1 | 0 |

Le tableau 1 démontre donc qu'il est possible, au moyen du dispositif selon l'invention, d'obtenir la répartition granulométrique d'une poudre telle que du carbonate de calcium.

### Exemple 2

Cet exemple a pour objet de démontrer la fiabilité du dispositif selon l'invention, en illustrant la corrélation entre les mesures qu'il effectue, et les mesures réalisées manuellement dans le laboratoire sur les mêmes échantillons.
Cet exemple met en oeuvre une poudre qui est du carbonate de calcium fabriqué par la société OMYA™ dans son usine Salses (France) et commercialisé par la suite sous le nom de Durcal™ 130.

Différents échantillons de ladite poudre ont été analysés par le dispositif selon l'invention, dans les mêmes conditions que celles décrites pour l'exemple 1. Parallèlement, ces échantillons ont été tamisés manuellement, à travers un tamis de 100 µm et un autres tamis de 250 µm.

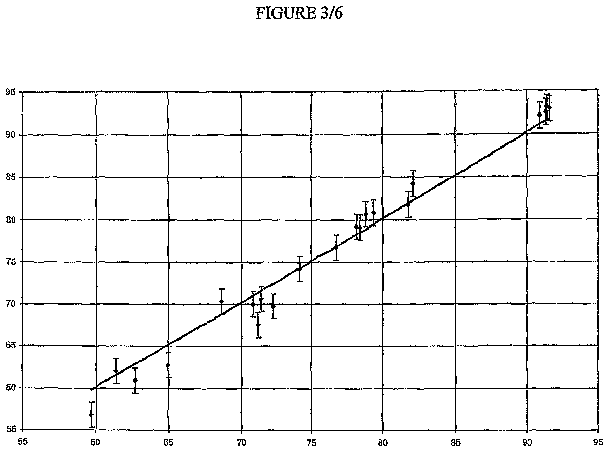

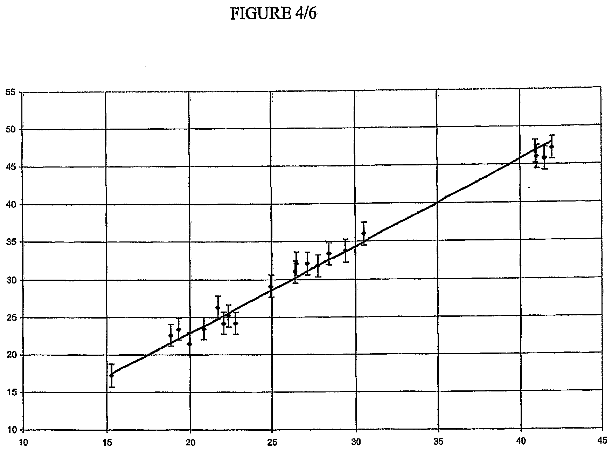

Les figures 3 et 4, à la fin de ce document, représentent la valeur du refus mesuré selon le test manuel de laboratoire (axe des ordonnées ou axe des y) en fonction du refus mesuré selon l'invention (axe des abscisses ou axe des x), respectivement :
- à 100 µm (figure 3 où est représentée la droite de régression linéaire d'équation y = 1,0018 x et de coefficient de régression égal à 0,9751)
- et à 250 µm (figure 4 où est représentée la droite de régression linéaire d'équation y = 1,1437 x et de coefficient de régression égal à 0,9856).

La lecture des figures 3 et 4 démontrent l'excellente corrélation entres les mesures réalisées manuellement à 100 et 250 µm, et celles obtenues directement par le dispositif selon l'invention sur les mêmes échantillons (cette corrélation est bien entendu possible pour des produits autres que le Durcal™ 130 et pour d'autres points granulométriques tels que 63 µm, 80 µm, 355 µm...).

### Exemple 3

Cet exemple illustre la mise en oeuvre de l'invention pour la caractérisation granulométrique d'une poudre qui est du sucre blanc cristallisé sous forme de poudre fabriqué par la société Cristal Union™ dans son usine de Corbeilles (France) et commercialisé par la suite sous la forme de sucre en poudre.

Pour ce faire, on a équipé le dispositif selon l'invention de 5 tamis dont les mailles sont égales à 125 µm, 250 µm, 500 µm, 630 µm et 800 µm, répondant aux besoins d'analyses de la susdites poudre (spécifications qualitatives client...). Les temps de passage de la poudre sur chacun des tamis sont respectivement égaux à 06:30 minutes, 06:00 minutes, 06:00 minutes, 05:00 minutes, 03:30 minutes et enfin de 02:30 minutes sur la position de libération des particules les plus grossières.

Les résultats correspondants, exprimés en pourcentage de particules dont le diamètre est supérieur à la maille de chaque tamis (dénommé refus) sont indiqués dans le tableau 2.

**Tableau 2 : refus à 125 µm, 250 µm, 500 µm 630 µm et 800 µm, déterminés à partir du dispositif selon l'invention, sur une poudre sèche de sucre cristallisé (commercialisé par la société CRISTAL UNION™).**

| **Refus à 125 µm (%)** | **Refus à 250 µm (%)** | **Refus à 500 µm (%)** | **Refus à 630 µm (%)** | **Refus à 800 µm (%)** |
|---|---|---|---|---|
| 98,4 | 94,5 | 60,7 | 37,6 | 18,1 |
| 98,7 | 93,3 | 57,4 | 38,2 | 19,5 |
| 99,1 | 93,9 | 55,5 | 38,7 | 18,6 |
| 98,8 | 94,4 | 59,5 | 41,3 | 20,5 |
| 99,4 | 93,7 | 56,9 | 40,2 | 17,8 |
| 98,5 | 93,4 | 57,3 | 39,8 | 19,4 |

Le tableau 2 démontre donc qu'il est possible, au moyen du dispositif selon l'invention, d'obtenir la répartition granulométrique d'une poudre telle que du sucre.

### Exemple 4

Cet exemple a pour objet de démontrer la fiabilité du dispositif selon l'invention, en illustrant la corrélation entre les mesures qu'il effectue, et les mesures réalisées manuellement dans le laboratoire sur les mêmes échantillons.
Cet exemple met en oeuvre une poudre qui est du sucre cristallisé fabriqué par la société CRISTAL UNION™ dans son usine Corbeilles (France) et commercialisé par la suite sous le nom de Candy™.

Différents échantillons de ladite poudre ont été analysés par le dispositif selon l'invention, dans les mêmes conditions que celles décrites pour l'exemple 3. Parallèlement, ces échantillons ont été tamisés manuellement, à travers un tamis de 250 µm et un autre tamis de 630 µm.

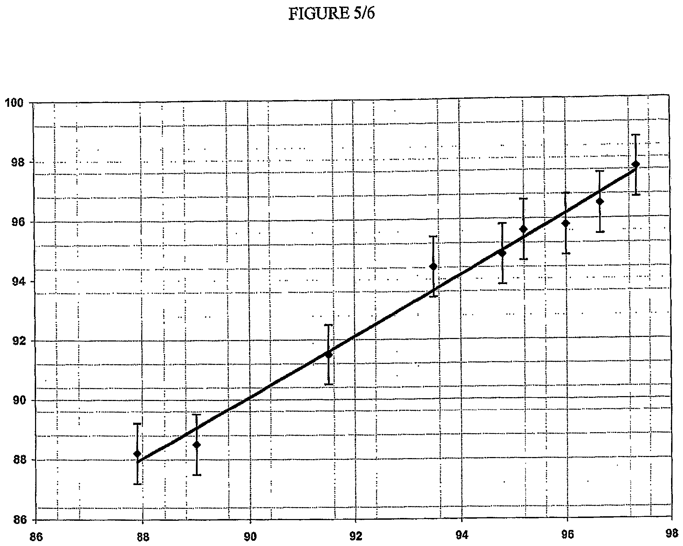

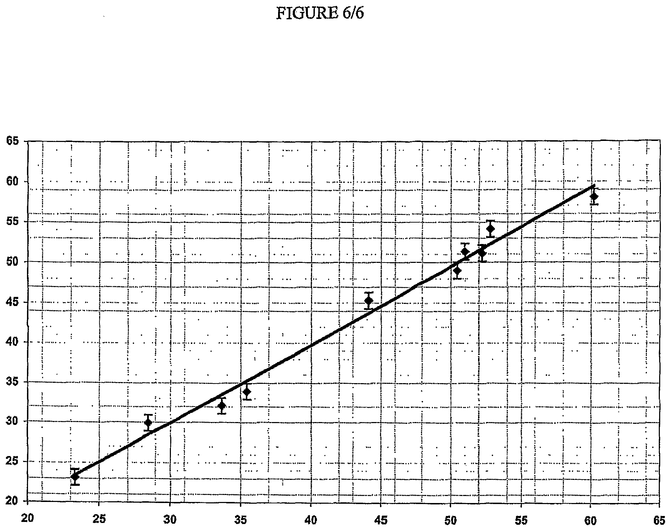

Les figures 5 et 6, à la fin de ce document, représentent la valeur du refus mesuré selon le test manuel de laboratoire (axe des ordonnées ou axe des y) en fonction du refus mesuré selon l'invention (axe des abscisses ou axe des x), respectivement :
- à 250 µm (figure 5 où est représentée la droite de régression linéaire d'équation y = 1,0175 x -1,51 et de coefficient de régression égal à 0,986)
- et à 630 µm (figure 6 où est représentée la droite de régression linéaire d'équation y = 0,9773 x - 0,6 et de coefficient de régression égal à 0,988).

La lecture des figures 5 et 6 démontrent l'excellente corrélation entres les mesures réalisées manuellement à 250 et 630 µm, et celles obtenues directement par le dispositif selon l'invention sur les mêmes échantillons (cette corrélation est bien entendu possible pour les différents types de sucres cristallisés et pour d'autres points granulométriques tels que 125 µm, 500 µm, 800 µm...).

## Revendications

1. Dispositif de caractérisation de la granulométrie de poudres comportant un organe d'alimentation (1), un organe d'évacuation (6), un organe de pesée (7), un organe de vibration continue (4), un organe de tamisage (2), ainsi qu'éventuellement un organe de pilotage, où :
- l'organe de tamisage est un organe rotatif autour d'un axe horizontal (3), et dispose d'au moins 1 position pour un espace vide ou espace de libération et d'introduction (e) de la poudre, **1 position pour une plaque anti-choc (a)**, au moins 2 positions correspondant à 2 tamis (b) (c) de maillage différents ;
- le tamis de maillage le plus fin (b) est situé juste exactement à côté de la plaque anti-choc (a), et le tamis (c) de maillage plus large que celui du tamis (b) est situé juste exactement à côté du tamis (b), et éventuellement un troisième tamis (d) de maillage plus large que celui du tamis (c) est disposé juste exactement à côté du tamis (c), et l'espace vide ou espace de libération ou d'introduction de la poudre (e) se trouve juste exactement à côté du dernier tamis, et est adjacent, à son bord opposé, au bord de la plaque anti-choc (a), le tout selon le sens de la rotation dudit organe rotatif ;
- lesdits espace vide ou de libération ou d'introduction de la poudre (e), ladite plaque anti-choc (a), et lesdits tamis (b), (c) et éventuellement (d) forment un ensemble géométrique dont l'axe longitudinal est coaxial avec ledit axe horizontal (3) dudit organe rotatif ;
- ledit dispositif possède un **organe de nettoyage** consistant en au moins une buse (f) et / ou un générateur d'ultrasons situé à la périphérie de l'organe de tamisage ;
- ledit dispositif possède un **organe d'accouplement élastique (5)** entre l'axe horizontal (3) de l'organe de tamisage et l'organe de vibration continu (4).

2. Dispositif selon la revendication 1, **caractérisé en ce que** l'organe de tamisage (2) est de forme cylindrique ou polygonale.

3. Dispositif selon l'une des revendications 1 ou 2, **caractérisé en ce que** la plaque anti-choc (a) est en inox et est équipée d'un coussin réalisé au moyen d'un caoutchouc naturel et d'un gel de silicone.

4. Dispositif selon l'une des revendications 1 à 3, **caractérisé en ce que** l'organe d'accouplement élastique (5) est de nature élastomérique.

5. Dispositif selon l'une des revendications 1 à 4, **caractérisé en ce qu'**il possède un organe de pilotage, embarqué ou déporté, ledit organe de pilotage étant préférentiellement un ordinateur ou un automate programmable.

6. Utilisation du dispositif selon l'une des revendications 1 à 5, pour la détermination de la granulométrie de poudres.

7. Utilisation selon la revendication 6, **caractérisée en ce qu'**elle permet la détermination de la granulométrie de poudres au moyen des différentes positions successives prises par l'organe de tamisage (2) autour de son axe horizontal (3), la position initiale de l'organe de tamisage (2) consistant en la plaque anti-choc (a) positionnée vers le bas.

8. Utilisation selon l'une des revendications 6 ou 7, **caractérisée en ce que** ladite détermination de la granulométrie des poudres a lieu en ligne, c'est-à-dire au cours du processus de fabrication desdites poudres.

9. Utilisation selon l'une des revendications 6 à 8, **caractérisée en ce que** lesdites poudres sont des poudres sèches, dont le taux d'humidité est inférieur à 5 % en masse d'eau, préférentiellement inférieur à 2 % en masse d'eau, très préférentiellement inférieur à 1 % en masse d'eau, tel que déterminé par des pesées différentielles, avant et après séchage desdites poudres.

10. Utilisation selon l'une des revendications 6 à 9, **caractérisée** en ce lesdites poudres possèdent une étendue granulométrique, telle que le diamètre moyen desdites poudres soit compris entre 0,05 et 10 mm, préférentiellement entre 0,1 et 5 mm, très préférentiellement entre 0,2 et 2 mm.

11. Utilisation selon l'une des revendications 6 à 10, **caractérisée en ce que** lesdites poudres sont des poudres utilisées dans le secteur alimentaire, et préférentiellement sont des poudres à base de cristaux de sucre, des poudres de sel, des farines, des poudres de lait, des poudres constituées de matériaux alimentaires déshydratés.

12. Utilisation selon l'une des revendications 6 à 10, **caractérisée en ce que** lesdites poudres sont des poudres lessivières.

13. Utilisation selon l'une des revendications 6 à 10, **caractérisée en ce que** lesdites poudres sont des poudres de céramiques.

14. Utilisation selon l'une des revendications 6 à 10, **caractérisée en ce que** lesdites poudres sont des poudres plastiques.

15. Utilisation selon l'une des revendications 6 à 10, **caractérisée en ce que** lesdites poudres sont des poudres métalliques.

16. Utilisation selon l'une des revendications 6 à 10, **caractérisée en ce que** lesdites poudres sont des poudres de peintures.

17. Utilisation selon l'une des revendications 6 à 10, **caractérisée en ce que** lesdites poudres sont des poudres pharmaceutiques.

18. Utilisation selon l'une des revendications 6 à 10, **caractérisée en ce que** lesdites poudres sont des toner pour impression.

19. Utilisation selon l'une des revendications 6 à 10, **caractérisée en ce que** lesdites poudres sont des engrais.

20. Utilisation selon l'une des revendications 6 à 10, **caractérisée en ce que** lesdites poudres sont des poudres constituées de matières minérales, et encore plus particulièrement des poudres de matières minérales à base de carbonate de calcium naturel et / ou précipité et / ou de dolomies et / ou de talc, et de manière encore plus particulière des poudres de matières minérales à base d'un carbonate de calcium naturel qui est du marbre, de la craie, du calcaire ou leurs mélanges.

## Patentansprüche

1. Vorrichtung zur Charakterisierung der Partikelgrössenverteilung von Pulvern, umfassend ein Zuführungselement (1), ein Auslasselement (6), ein Wiegeelement (7), ein kontinuierliches Vibrationselement (4), ein Siebelement (2), und gegebenenfalls ein Steuerungselement, bei der
- das Siebelement ein Element ist, das sich um eine horizontale Achse (3) dreht, und das wenigstens eine Stelle für einen freien Zwischenraum oder einen Pulverfreisetzung- und Einbringungsraum (e) aufweist, eine Stelle für eine stossfeste Platte (a), wenigstens zwei Stellen, die zwei Sieben (b) (c) mit verschiedener Maschenweite entsprechen;
- das Sieb mit der kleinsten Maschenweite (b) genau neben der stossfesten Platte (a) angeordnet ist, und das Sieb mit einer Maschenweite (c), die grösser ist als die von Sieb (b), genau neben Sieb (b) angeordnet ist, und gegebenenfalls einem dritten Sieb (d) mit einer Maschenweite, die grösser ist als die von Sieb (c), das genau neben Sieb (c) angeordnet ist, und der freie Zwischenraum oder der Pulverfreisetzung- und Einbringungsraum (e) befindet sich genau neben dem letzten Sieb und grenzt mit seinem entgegengesetzten Rand an den Rand der stossfesten Platte (a) an, alles in Drehrichtung des Drehelements;
- der freie Zwischenraum oder der Pulverfreisetzung- und Einbringungsraum (e), die stossfeste Platte (a), die Siebe (b), (c), und gegebenenfalls (d) bilden eine geometrische Einheit, deren Längsachse koaxial zur horizontalen Achse (3) des Drehelements steht;
- die Vorrichtung ein Reinigungselement besitzt, bestehend wenigstens aus einer Düse (f) und/oder einem Ultraschallgenerator, das am Umkreis des Siebelements angeordnet ist;
- die Vorrichtung ein elastisches Kupplungselement (5) zwischen der horizontalen Achse (3) des Siebelements und dem kontinuierlichen Vibrationselement (4) besitzt.

2. Vorrichtung nach Anspruch 1, **dadurch gekennzeichnet, dass** das Siebelement (2) eine zylinderförmige oder polygonale Form hat.

3. Vorrichtung nach einem der Ansprüche 1 oder 2, **dadurch gekennzeichnet, dass** die stossfeste Platte (a) aus rostfreiem Metall und mit einem Polster ausgestattet ist, welches durch Verwenden von natürlichem Kautschuk und einem Silikongel hergestellt wurde.

4. Vorrichtung nach einem der Ansprüche 1 bis 3, **dadurch gekennzeichnet, dass** das elastische Kupplungselement (5) elastomerer Natur ist.

5. Vorrichtung nach einem der Ansprüche 1 bis 4, **dadurch gekennzeichnet, dass** sie ein Steuerungselement besitzt, eingebettet oder ferngesteuert, wobei das Steuerungselement bevorzugt ein Computer oder eine speicherprogrammierbare Steuerung ist.

6. Verwendung der Vorrichtung gemäss einem der Ansprüche 1 bis 5, zur Bestimmung der Partikelgrössenverteilung von Pulvern.

7. Verwendung nach Anspruch 6, **dadurch gekennzeichnet, dass** sie die Bestimmung der Partikelgrössenverteilung von Pulvern mittels der verschiedenen, aufeinanderfolgenden Stellungen gestattet, welche von dem Siebelement (2) um seine horizontale Achse (3) eingenommen werden, wobei die Ausgangstellung des Siebelements (2) darin besteht, dass die stossfeste Platte (a) unten angeordnet ist.

8. Verwendung nach einem der Ansprüche 6 oder 7, **dadurch gekennzeichnet, dass** die Bestimmung der Partikelgrössenverteilung von Pulvern inline stattfindet, d.h. während dem Herstellungsverfahren der Pulver.

9. Verwendung nach einem der Ansprüche 6 bis 8, **dadurch gekennzeichnet, dass** die Pulver Trockenpulver sind, bei denen der Feuchtigkeitsgehalt kleiner 5 Massenprozent Wasser ist, bevorzugt kleiner 2 Massenprozent Wasser, und besonders bevorzugt kleiner 1 Massenprozent Wasser, wie durch Differenzwiegen, vor und nach dem Trocknen der Pulver, bestimmt.

10. Verwendung nach einem der Ansprüche 6 bis 9, **dadurch gekennzeichnet, dass** die Pulver einen Partikelgrössenverteilungsbereich aufweisen, so dass der mittlere Durchmesser der Pulver zwischen 0,05 und 100 mm liegt, bevorzugt zwischen 0,1 und 5 mm, am meisten bevorzugt zwischen 0,2 und 2 mm.

11. Verwendung nach einem der Ansprüche 6 bis 10, **dadurch gekennzeichnet, dass** die Pulver Pulver sind, die im Lebensmittelbereich verwendet werden, und sind bevorzugt Pulver basierend auf Zuckerkristallen, Salzpulver, Mehle, Milchpulver, sowie Pulver, die aus entwässerten Lebensmittelmaterialien bestehen.

12. Verwendung nach einem der Ansprüche 6 bis 10, **dadurch gekennzeichnet, dass** die Pulver Waschpulver sind.

13. Verwendung nach einem der Ansprüche 6 bis 10, **dadurch gekennzeichnet, dass** die Pulver Keramikpulver sind.

14. Verwendung nach einem der Ansprüche 6 bis 10, **dadurch gekennzeichnet, dass** die Pulver Kunststoffpulver sind.

15. Verwendung nach einem der Ansprüche 6 bis 10, **dadurch gekennzeichnet, dass** die Pulver Metallpulver sind.

16. Verwendung nach einem der Ansprüche 6 bis 10, **dadurch gekennzeichnet, dass** die Pulver Farbpulver sind.

17. Verwendung nach einem der Ansprüche 6 bis 10, **dadurch gekennzeichnet, dass** die Pulver Arzneimittelpulver sind.

18. Verwendung nach einem der Ansprüche 6 bis 10, **dadurch gekennzeichnet, dass** die Pulver Druckertoner sind.

19. Verwendung nach einem der Ansprüche 6 bis 10, **dadurch gekennzeichnet, dass** die Pulver Düngemittel sind.

20. Verwendung nach einem der Ansprüche 6 bis 10, **dadurch gekennzeichnet, dass** die Pulver Pulver sind, die aus Mineralmaterialien bestehen, und spezieller Mineralmaterialpulver basierend auf natürlichem und/oder gefälltem Calciumcarbonat und/oder Dolomiten und/oder Talk, und spezieller Mineralmaterialpulver basierend auf einem natürlichen Calciumcarbonat, das Marmor, Kreide, Kalkstein oder Gemische davon ist.

## Claims

1. A device for characterizing the particle size of powders comprising a supply element (1), a discharge element (6), a weighing element (7), a continuous vibrating element (4), a screening element (2), as well as optionally a control element, wherein:
- the screening element is an element that rotates about a horizontal axis (3), and has at least 1 position for an empty space or a space for discharging and introducing (e) the powder, 1 position for an impact protection plate (a), at least 2 positions corresponding to 2 sieves (b) (c) of different mesh size;
- the sieve with the finer mesh size (b) is located exactly just next to the impact protection plate (a), and the sieve (c) with a larger mesh than sieve (b) is located exactly just next to sieve (b) and optionally a third sieve (d) with a larger mesh size than sieve (c) is arranged exactly just next to sieve (c), and the empty space or the space (e) for discharging and introducing the powder is located exactly just next to the last sieve and is adjacent, at its opposite edge, to the edge of the impact protection plate (a) all according to the rotating direction of the rotating element;
- said empty space or space (e) for discharging or introducing the powder, said impact protection plate (a) and said sieves (b), (c) and optionally (d) form a geometrical assembly whose longitudinal axis is coaxial with said horizontal axis (3) of said rotatory element;
- said device has a cleaning element consisting of at least one nozzle (f) and/or an ultrasound generator located at the periphery of the screening element;
- said device has an elastic coupling element (5) between the horizontal axis (3) of the screening element and the continuous vibration element (4).

2. The device according to claim 1, **characterized in that** the screening element (2) is of cylindrical or polygonal shape.

3. The device according to claim 1 or 2, **characterized in that** the impact plate (a) is made of stainless steel and is equipped with a cushion made of natural rubber and silicone gel.

4. The device according to one of claims 1 to 3, **characterized in that** the elastic coupling element (5) is of elastomeric nature.

5. The device according to one of claims 1 to 4, **characterized in that** it has a control element, embedded or remote, said control element preferably being a computer or a programmable automaton.

6. A use of the device according to one of claims 1 to 5 for determining the particle size of powders.

7. The use according to claim 6, **characterized in that** it allows to determine the powder particle size by means of the various successive positions taken by the screening element (2) about its horizontal axis (3), the initial position of the screening element (2) consisting of the impact protection plate (a) positioned downwardly.

8. The use according to one of claims 6 or 7, **characterized in that** said determination of the powder particle size takes place in-line, i.e. during the manufacturing process of said powders.

9. The use according to one of claims 6 to 8, **characterized in that** the said powders are dry powders, the moisture content of which is less than 5% by weight of water, preferably less than 2% by weight of water, more preferably less than 1% by weight of water, as determined by differential weighing, before and after drying said powders.

10. The use according to one of claims 6 to 9, **characterized in that** said powders have a particle size range such that the mean diameter of said powders is between 0.05 and 10 mm, preferably between 0.1 and 5 mm, more preferably between 0.2 and 2 mm.

11. The use according to one of claims 6 to 10, **characterized in that** said powders are powders used in the food sector, and preferably are powders based on sugar crystals, salt powders, flours, milk powders, powders consisting of dehydrated food materials.

12. The use according to one of claims 6 to 10, **characterized in that** said powders are washing powders.

13. The use according to one of claims 6 to 10, **characterized in that** said powders are ceramic powders.

14. The use according to one of claims 6 to 10, **characterized in that** said powders are plastic powders.

15. The use according to one of claims 6 to 10, **characterized in that** said powders are metallic powders.

16. The use according to one of claims 6 to 10, **characterized in that** said powders are paint powders.

17. The use according to one of claims 6 to 10, **characterized in that** said powders are pharmaceutical powders.

18. The use according to one of claims 6 to 10, **characterized in that** said powders are printing toners.

19. The use according to one of claims 6 to 10, **characterized in that** said powders are fertilizers.

20. The use according to one of claims 6 to 10, **characterized in that** said powders are powders consisting of mineral materials, and more particularly mineral powders based on natural and/or precipitated calcium carbonate and/or dolomites and/or talc, and even more particularly mineral powders based on a natural calcium carbonate which is marble, chalk, limestone or mixtures thereof.
